# EUROPEAN PATENT SPECIFICATION

(11) **EP 3 513 022 B1**
(45) Date of publication and mention of the grant of the patent: **14.01.2026**
(21) Application number: 17851688.6
(22) Date of filing: 18.09.2017
(51) Int. Cl.: E05C 19/14, B64D 29/06, E05B 41/00

(54) **SAFETY HOOK LATCH**
SICHERHEITSHAKENVERSCHLUSS
VERROU À CROCHET DE SÉCURITÉ

(30) Priority: 18.09.2016 US 201615268613
(43) Date of publication of application: 24.07.2019
(73) Proprietor: QRP, Inc., Leland, NC 28451 (US)
(72) Inventor: PARSELL, Michael, J., Wilmington, NC 28412 (US); HERNANDEZ, Andres, Kent, WA 98031 (US)
(74) Representative: Manitz Finsterwald Patent- und Rechtsanwaltspartnerschaft mbB
(86) International application number: PCT/US2017/051980
(87) International publication number: WO 2018/053387

(56) References cited:
- EP-A1- 0 839 714
- EP-B1- 0 839 714
- FR-A- 981 093
- US-A- 2 703 431
- US-A- 3 259 412
- US-A- 5 984 382
- US-A- 5 984 382
- US-A- 6 036 238
- US-A- 6 042 156
- US-A1- 2008 129 056
- US-A1- 2015 259 957
- US-A1- 2016 264 250
- US-A1- 2016 347 465
- US-B1- 6 279 971

## Description

### Field of the Invention

The present invention relates to a cinch latch, which connects a first structural element to a keeper on a second structural element. More specifically, the invention relates to aircraft panel latches having a hook and an over-center locking linkage.

### Background of the Invention

A wide variety of latching mechanisms for use in aircraft exists in the prior art because aircraft have many components, such as fuselage panels including cowlings and the like, which must be opened and closed very securely. For example, tension latches mounted on one panel cinch to a keeper on a second panel to hold the movable panels closed. Other latches include sliding toggle linkages to minimize the kinematic envelope of the latch. These linkages rotate around a mounting pin to produce the latch reach. The complexity of quality aircraft latches makes them relatively large and heavy. Since every component of an aircraft should be as light as possible, it would be desirable to provide a quality latch having a reduced size and weight compared to the prior art.

To reduce weight, aircraft panels are relatively thin, which translates to an associated reduction in sturdiness. As a result, the aircraft panels, and other structures to which the above-described latches are attached, are delicate and can be easily damaged. For example, with some prior art latches such as the ones disclosed in EP0839714A1, the free end of an open latch may obstruct an opening defined by a movable panel for which the latch is provided. Therefore, when closing the movable panel, it may strike the latch and be damaged if the latch is not properly retracted. This problem is often encountered with open overhead panels where gravity biases the latch assembly in the closed direction, thereby orienting the hook in an extended position pointing upwardly. This configuration occurs if the center of gravity of the latch is "behind" (in the direction away from the hook) the pivot point of the panel-mounting pin. If this occurs, the hook end of the latch could be jammed against the edge of the mating substructure if the latch is not first pulled away before attempting to close the panel. This weight distribution problem is often solved by adding "dead" weight to the hook end of the latch so that it hangs downward, away from the opening, and out of the path of the articulating panel. However, this solution contradicts the salient aircraft design consideration of weight reduction. Therefore, it is desirable to provide a latch that reduces the risk of accidental damage to the surrounding aircraft structures to which it is attached.

Another limitation of prior art latches is possible inadvertent opening of the latch by unexpected contact. The above-described latches most often utilize a push-in, trigger-actuated release mechanism for ease of use. Accidental contact with the trigger, such as being hit by an object while in flight, can open the latch. Furthermore, the location of the latch is not easily seen by inspection personnel so that a latch that is not properly closed can go undetected.

Many of the above-described hook latches do not have a safety measure that enables an inspector to visually confirm that the latch is properly closed. Many prior art hook latches also don't have a safety measure that denies access to the trigger release mechanism of the latch to prevent accidental latch release by maintenance personnel or objects that may impact the aircraft during flight. Therefore, it is desirable to provide a latch having the aforementioned safety measures.

### Summary of the Invention

The invention comprises a latch mechanism with an arrangement of components that places the center of gravity of the mechanism in front of the mounting pin. Therefore, in applications where the latch swings in the vertical plane, the hook will necessarily hang downward away from the keeper when the latch is opened without the need for adding dead weight. This functionality has been achieved in part by locating the mounting pin slot at the very end of the latch arm and arranging the toggle linkage so that the linkage-to-hook pivot joint is on the body of the latch arm in front of the mounting pin.

The latch includes a unique nesting toggle linkage that minimizes overall latch volume. Each link of the linkage has a U-shaped lateral cross section with a central channel that receives the other link when the latch is closed. Furthermore, the links fold toward each other instead of away from each other while closing, which reduces the latch's overall length when fully closed. The latch may include a keeper detector, which prevents the actuation handle from closing if the keeper is not captured by the hook. The keeper detector helps prevent unsuccessful latching and provides a visual indication when a panel is closed but the keeper is not engaged.

The invention comprises a tension hook latch that applies closing tension between two objects such as a latch mounting pin and a keeper engaged by a hook which extends from one end of the latch. This type of latch is often called a "cinch-up latch" or a "pull-in latch". The invention comprises a toggle link latch mechanism with an arrangement of components that places the center of gravity of the mechanism in front of the mounting pin. Therefore, in overhead applications where the latch swings in the vertical plane, the hook will necessarily hang downward away from the keeper when the latch is opened without the need for adding dead weight. This functionality has been achieved in part by locating the mounting pin slot at the very end of the latch arm and arranging the toggle linkage so that the linkage-to-hook pivot joint is on the body of the latch arm in front of the mounting pin.

The invention includes a handle safety cover affixed at one end to the front of the handle that extends the length of the handle. The other end of the cover is releasably attached to the toggle linkage. The safety cover prevents access to a trigger mechanism which releases the latch handle from a locked closed position. The invention further may include a sensor, which detects the absence of the keeper in the hook to disable the handle from locking in the closed position when the hook is not occupied by the keeper.

More specifically, the novel tension latch has a latch mechanism for releasably connecting two elements, which is operable between engaged and released positions. The rear end of an elongate handle is pivotably affixed to the latch mechanism about a first axis of rotation and is operative to move said latch mechanism from the engaged position to the released position as the handle is moved from a closed to an open position. The latch handle is lockable in the closed position by a manually operable handle catch. When the latch is mounted overhead and the latch is disengaged with the handle open, the handle extends downwardly away from the latch mechanism by the force of gravity and the cover extends downwardly away from the first end of the handle also by the force of gravity. The handle is spring-biased toward the open position.

The latch mechanism includes a frame having a hook at one end for engaging an object such as a keeper pin, which occupies a mouth of the hook. The handle catch is spring-biased and is rotatably affixed to a sensor arm which in turn is rotatably affixed to the frame. The sensor arm is moved by objects that are placed into the hook mouth and is spring-biased toward the hook-unoccupied position. A portion of the sensor arm laterally covers the mouth of the hook and disables the operation of the handle catch when the hook is not occupied, thereby preventing the handle from being locked in the closed position unless the hook is occupied.

In one preferred embodiment, a handle cover is hingedly affixed at one end to the front end of the handle and is moveable between open and closed positions. A cover catch on an opposite end of the cover is engagable with the latch mechanism for releasably holding the cover closed. The cover is substantially coextensive with and in close abutment with the handle when the cover is in its closed position. The cover has a spring-biased trigger for releasing the cover from its closed position. The cover is rotatable about a second axis of rotation parallel to the axis of the handle joint and prevents access to the handle catch when the cover is closed. The cover catch is spring-biased and engageable with a toggle link of a toggle linkage of the latch mechanism. The cover catch, the handle and the frame member are constructed and arranged so that the cover cannot be closed when the handle is not first closed and the latch mechanism is fully engaged. The latch is stabilized when fully engaged by an over-center condition of the latch mechanism toggle linkage.

The novel latch provides a high degree of visibility if it unsecured. One major use of the latch is to fasten aircraft engine cowlings. Modern aircraft engines are very large and have minimal ground clearance. As a result, an unlatched or incompletely latched condition may not be easily seen during an inspection of the latch mounted on the bottom of the engine. If the novel latch is installed on the bottom of the engine and is not properly closed, the handle hangs down and the handle cover hangs down even farther. This construction makes it much easier to detect if the latch is not properly closed.

### Brief Description Of The Drawings

Fig. 1 is a top right front perspective view of one example not according to the claimed invention;
Fig. 2 is a cross-sectional view of the example shown in Fig. 1;
Fig. 3 is a bottom plan view of the example shown in Fig. 1;
Fig. 4 is an exploded assembly view of the example show in Fig. 1;
Figs. 5a through 5e depict a series of paired corresponding perspective and elevational views of another example not according to the claimed invention in various operational configurations;
Fig. 6 is a top right front perspective view of a latch in accordance with a preferred embodiment of the invention;
Fig. 7 is bottom right cross-sectional, perspective view of the latch of Fig. 6;
Fig. 8 is a top right perspective view of the latch of Fig. 6 shown in the open position;
Fig. 9 is a top rear perspective view of the handle latch and hook sensor assembly of the latch of Fig. 6;
Fig. 10 is an exploded assembly view of the latch of Fig. 6; and,
Fig. 11 is a left side elevation showing the latch of Fig. 6 in the open position and affixed to a portion of an aircraft adjacent a fan cowl housing.

### Description of the Preferred Embodiments

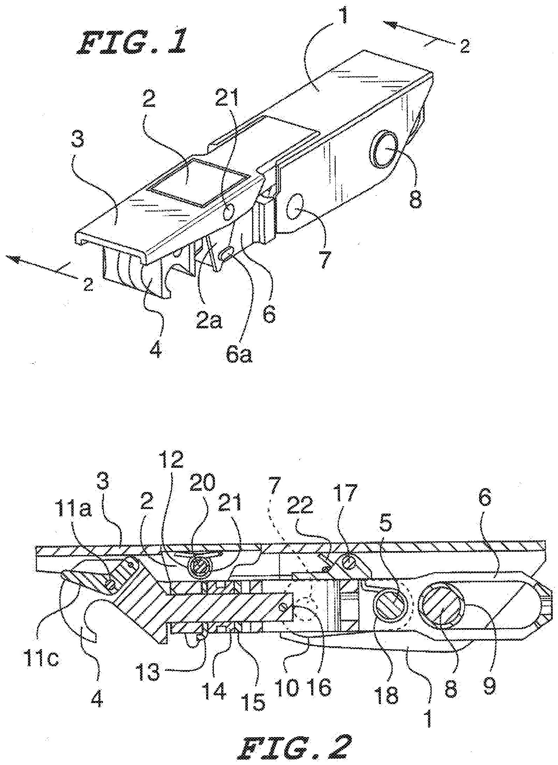

A latch not in accordance with the claimed invention is illustrated and described with respect to Figs. 1-4. Referring first to Figs. 1 and 2, the latch has a substantially-symmetrical construction about a longitudinal axis so features shown on one side apply equally to the opposite side. The latch generally includes an upper link 1, lower link 10, a handle 3, a hook 4, and additional linkage components that operably connect the handle 3 to the hook 4. As described in detail below, movement of the handle 3 extends and retracts the hook 4 between open and closed positions.

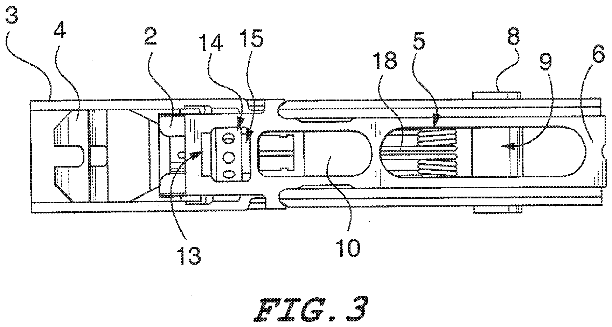

The upper link 1 is constructed of thin sheet metal and has side walls that surround other internal components of the latch to minimize the latch's overall volume and weight. The upper link 1 operably pivots about a mounting pin 8 that connects the latch to an associated fixed structure such as a portion of an aircraft (not shown). Rivets 7 straddle the front walls of the upper link and hingedly connects it to the front of a lower link 10, which nests inside a central channel of the upper link 1. The lower link 10 is also pivotally connected to an elongate latch arm 6 by a pin 5. The rear walls of the latch arm 6 include a pair of slots 6b in which the mounting pin 8 can translate. Each link includes a center channel between opposing thin sidewalls forming a U-shaped lateral cross section. When assembled, the body of the latch arm 6 nests within the lower link 10, which in turn nests within the upper link 1. This nested configuration provides a very compact device as better appreciated when viewing Fig. 3. This combination of elements forms the latch toggle linkage.

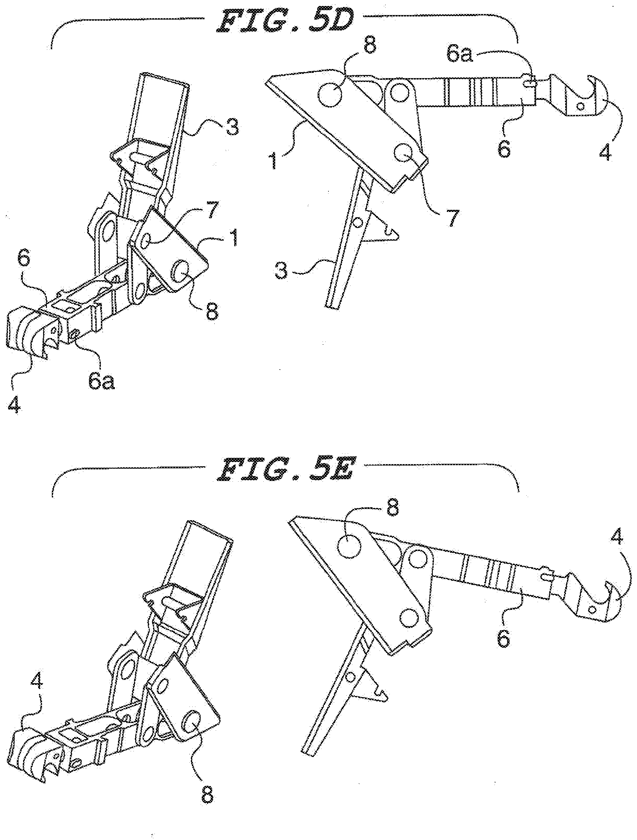

A handle 3 is rotatably connected to the lower link 10 and the upper link 1 by a pin 17, which carries a spring 22 that biases the handle upward away from the lower link 10 toward the open position of the latch. The location of the pin 17 permits a small amount of free travel of the handle. Likewise, another spring 18 biases the lower link upward away from the latch arm 6 to hold the latch open. The handle 3 actuates the latch between open and closed positions. After a limited amount of free movement restricted by the back end of the handle abutting the lower link 10, continued lifting of the handle 3 will lift the lower link upward, extending the hook and releasing the latch as best seen in Figs. 5d and 5e.

As described above, the handle extends and retracts a latch arm 6 having hook 4 at the front end. The hook 4 engages and grabs a keeper (not shown) in the closed position and applies a tensile clinch load between the keeper and the latch mounting pin 8.

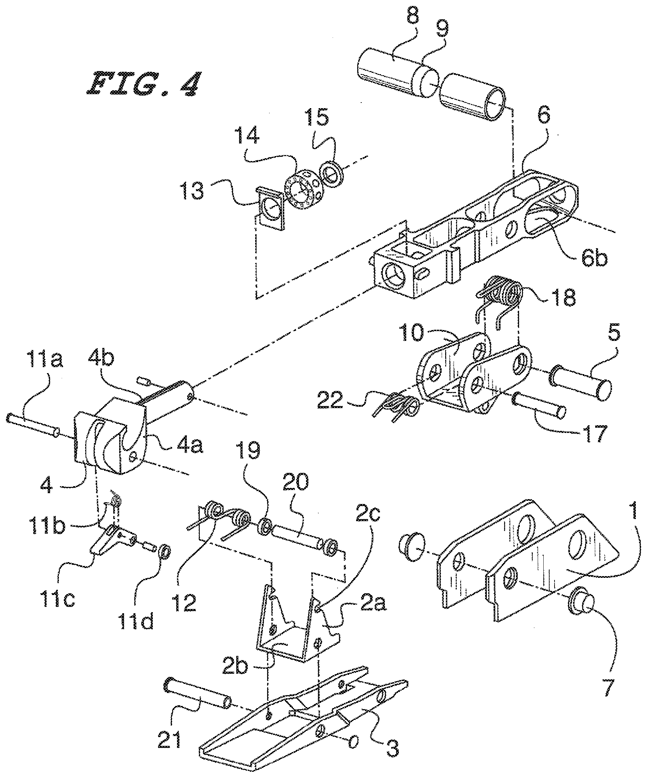

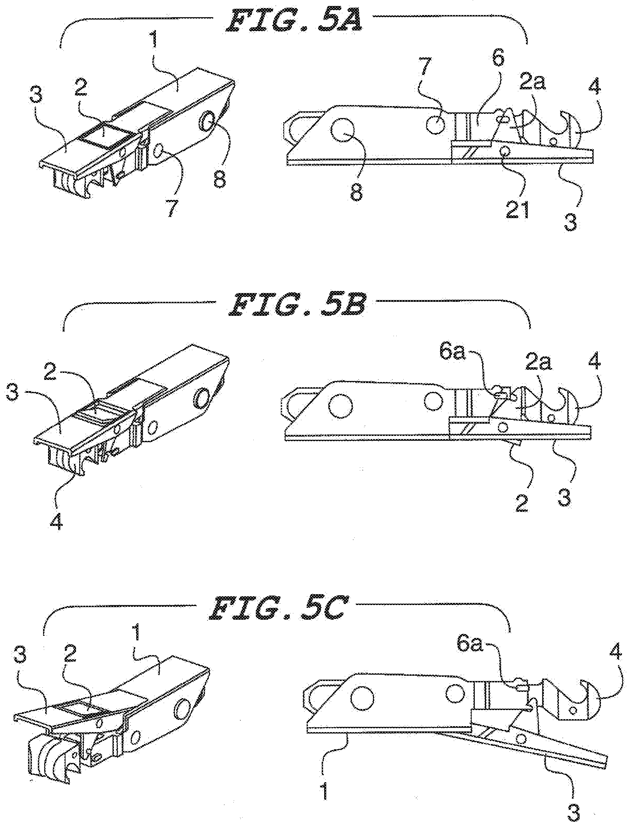

The handle 3 includes a trigger 2 that releasably locks the handle 3 in a closed position. The trigger 2 is pivotally attached to the handle 3 by a pin 20, which includes a concentric sleeve 21 about which the handle can pivot to a limited extent. The trigger 2 releasably holds the handle 3 down in the configuration shown in Figs. 1 and 5a when the latch is locked. As best seen in Fig. 4, the trigger 2 has a generally-planar base 2b and two side arms 2a fixed at their proximal ends to and extending transversely from opposed sides of the base 2b. The distal end of each arm 2a includes a transverse slot 2c, which creases a barbed end. The slots 2c are shaped and located to engage a catch 6a on opposed sides of the latch arm 6. In this embodiment, the catches 6a comprise a small protuberance that extends from the side walls of the latch arm 6. The trigger 2 is spring loaded and the side arms 2a include barbed ends, which bear against the catches 6a as the handle 3 is closed. This action ensures that the slots 2c capture the catches 6a to provide a self-actuating effect when the handle 3 is pushed fully closed.

An exploded view of the latch arm 6, and the other latch components, is shown in Fig. 4 from a bottom perspective. The latch arm 6 is arranged in fixed connection to a hook 4 at the front end and in translating connection to the mounting pin at the rear end. The mounting pin 8 is surrounded by a bushing 9 received through a pair of longitudinally-extending slots 6b in the side walls of the latch arm 6. The hook assembly 4 consists of hook-shaped head 4a and a cylindrical mount 4b, which is constructed to cooperatively engage and connect to a yoke in the front of the latch arm 6. A nut 14, nut plate 13, spring 15 and stop pin 16 connect the hook 4 to the yoke.

The trigger 2 is connected to the handle 3 by a pin 20. Another spring 12 biases the trigger 2 upwardly so that its top surface is flush with the top of the handle 3 when the latch is closed and locked as shown in Fig. 1. Each side arm 2a of the trigger 2 has a slot which engages the locking catch 6a protruding from the sides of the latch arm 6 as seen in Figure 1 and as described above.

The various components discussed above are shown assembled and in the locked position viewed from the side and the top in Fig. 2. In a preferred example, not according to the claimed invention, the hook 4 includes means for detecting whether or not the hook is engaged with the keeper. In one embodiment, the detecting means 11 is fixed to the head 4a as best seen in Fig. 4. The detecting means includes a sensor lever 11c having one arm that is biased downward into the mouth of the hook 4. When the keeper (not shown) properly occupies the hook 4, a first lever arm is pushed upwardly against the bias of a spring 11b into the position shown in this Fig. 2. Otherwise, when the mouth of the hook 4 is unoccupied, the first lever arm will point downwardly and a second lever arm will then point upwardly and make contact with the handle 3 to stop the handle 3 from fully closing. Thus, the detecting means prevents the latch 3 from closing if the hook is not properly engaged with the keeper.

The compact design of the latch is best illustrated in Fig. 3. The major components, including the upper link 1, the lower link 10, the latch arm 6, and the handle 3 all nest with one another more or less when the latch is closed. As shown in Fig. 4, the upper link 1 has U-shaped central channel with sidewalls that surrounds the lower link 10 and part of the handle 3. The lower link 10 likewise has a channel that surrounds a portion of the latch arm 6. In addition, the upper link 1 surrounds a portion of the handle 3. As depicted in Fig. 3, the relatively thin sidewalls of the links provide a minimal lateral dimension of the latch. The length of the latch is also minimized by the toggle linkage because the toggle links fold together rather than spread apart as leverage is applied to the hook when it is being closed. This feature is illustrated in reverse order in the opening sequence of Figs. 5a through 5e. The construction of the toggle linkage provides an over-center alignment of the link joints so that a portion of the applied load is transmitted through the linkage to forcibly hold the latch in a stable closed condition.

Figs. 5a through 5e depict a sequence of configurations of the latch as it transitions from fully closed to fully open. A top perspective view of the latch is shown on the left of each Figure. On the right of each Figure, the latch is shown in the same configuration as on the left but in an upside-down, side-elevational view, which is a typical in an aircraft application where the latch swings in the vertical plane. Operation of the keeper detecting means 11 is not shown since the associated mating keeper is not depicted here.

In Fig. 5a, the latch is shown properly closed and secured. A portion of the load applied between the hook and the mounting pin 8 holds the latch closed by virtue of an over-center alignment of the linkage joints. In Fig. 5b, the latch is shown immediately after the trigger 2 has been depressed to release the handle from the locked position. Initial depression of the trigger rotates the side arms 2a out of engagement with the catches 6a on latch arm 6.

In Fig. 5c, the latch is shown after gravity and the spring has urged the handle 3 outward to the extent of its free travel on the lower link. At this location, a back end of the handle contacts the top of the lower link. In this configuration with the handle popped outward, the handle can be easily grasped to open the latch.

In Fig. 5d, the latch is shown after the handle has been pulled open, which extends the hook to its maximum reach or take-up position. Fig. 5d illustrates the nesting of the links 1 and 10 together with the handle 3 as well as disengagement of the side arm 2a from the catches 6a.

Fig. 5e depicts the maximum reach position of the hook 4, which corresponds to a release position of the hook 4 from a keeper. A spring biases the lower link away from the hook 4 to hold the latch fully opened. With the keeper released, the latch arm rotates about the mounting pin 8, which allows the hook 4 to hang down away from the keeper (to the extent allowed by surrounding structures) because the center of gravity of the latch is in front of the mounting pin 8.

With the operational explanation of Figs. 5a through 5e taken together with the explanation of Figs. 1 through 4, a full understanding of the latch will have been appreciated by one of skill in the mechanical arts. It will be readily apparent that the objects have been achieved by providing a light-weight latch with an extremely small kinematic envelope while allowing adequate reach and closing leverage. Furthermore, the objective of providing a lever latch that is protective of surrounding structures has also been achieved.

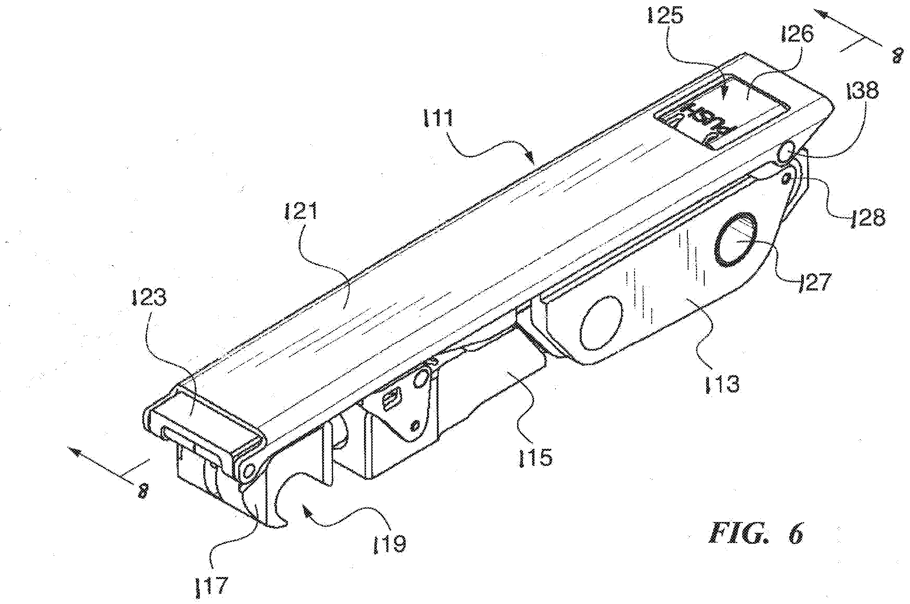

A latch 111 in accordance with a preferred embodiment of the invention is illustrated and described in Figs. 6-11. The latch 111 has a substantially-symmetrical construction about a longitudinal axis so features shown on one side apply equally to the opposite side.

Referring to Fig. 6, the latch 111 is shown in the closed position. The latch 111 generally comprises a tension latch mechanism, designated generally by reference numeral 170, a handle 123 connected the latch mechanism 170, and a cover 121 connected to the handle 123. In a preferred embodiment the latch mechanism 170 includes a frame 115, a toggle linkage 113 connected to a first (rear) end of the frame, and a hook 117 connected to a second (front) end of the frame. A first (rear) end of the handle 123 is pivotally connected to the linkage 113. A second (front) end of the handle 123 is pivotally connected to the cover 121. As described in detail below, movement of the handle 123 extends and retracts the hook 117 between open and closed positions. The linkage 113 is structurally and functionally similar to the linkage of the latch described above with respect to Figs. 1-6.

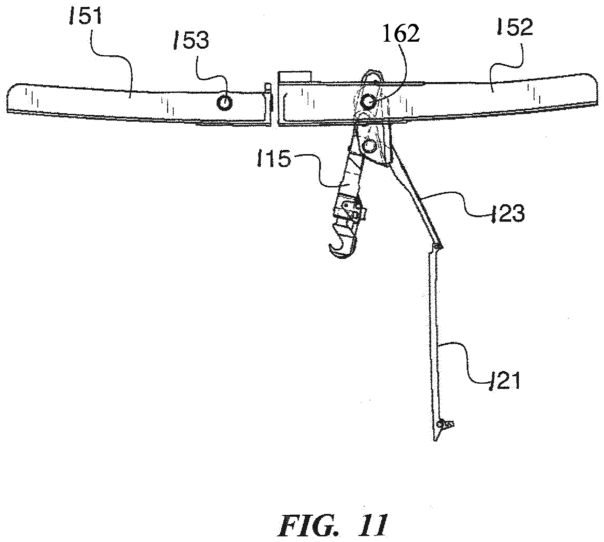

As best seen in Fig. 11, the latch 111 connects to a fixed portion of the aircraft 152 by a mounting pin 162, which extends through a mounting pin bushing 127. The latch 111 provides tension engagement between the mounting pin 162 and a second element such as a keeper 153, which is fixed to a movable portion 151 of the aircraft. In a preferred embodiment, the keeper 153 engages and sits in the mouth 119 of the hook 117.

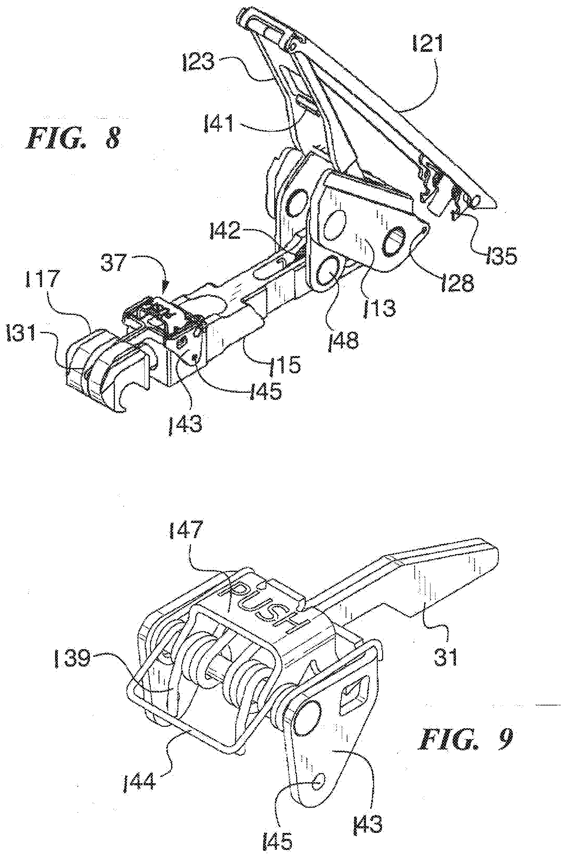

A handle cover 121 is pivotally connected to the front end of the handle 123 as best seen in Fig. 8. The cover 121 nests in close abutment with the handle 123 when the latch 111 is closed as seen in Fig. 6. In one preferred embodiment, the cover 121 is held closed by a cover catch 125 located proximate the back end of the handle 123. The cover catch 125 is pivotally connected to the cover 121 by a pivot pin 138. The catch 125 includes barbed hooks 135 that releaseably engage catch pins 128 on the inside of the toggle linkage 113 as best seen in Fig. 8. The top of the catch 125 includes a trigger portion 126 that lies substantially flush with the top of the cover 121 when the latch 111 is closed as shown in Fig. 6.

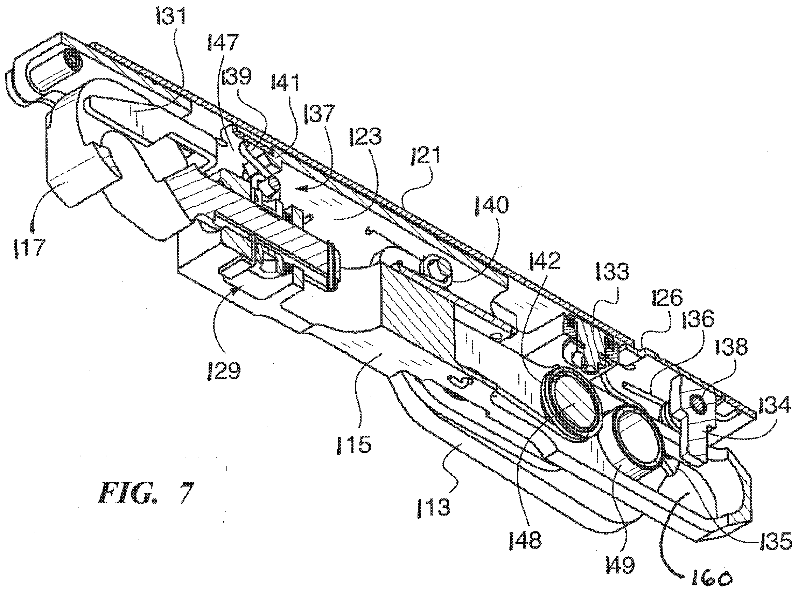

Fig. 7 shows the underside of the cover catch 125 at the rear of the latch 111. The catch trigger 126 is biased toward its home position by a spring 136. A plunger spring assembly 133 biases the cover away from the toggle linkage 113. A rubber bumper 134 is attached to the pivot pin 138. The bumper 134 protects surrounding objects and the catch 125 from impact when the latch 111 swings open.

Referring to Fig. 7, the latch 111 is connected to a static structure by a mounting pin (shown in Fig. 11) that extends through the mounting bushing 149. Linear, axial movement of the frame 115 and hence hook 117 relative to the mounting pin 162 is enabled by a slot 160 at the rear of the frame 115. One end of a handle 123 is affixed to the linkage 113, which is affixed to the frame at joint 148. The other end of the handle 123 is fixed to the cover 121. The linkage 113 includes a main spring 142 that biases the linkage 113 toward the released position. The handle 123 is biased toward the open position by a spring 40. The latch 111 is stabilized in the closed and engaged position by an over-center condition of the toggle linkage 113.

Referring to Fig. 7, the frame 115 includes a hook-length adjustment mechanism 129, which adjusts the "throw" of the hook, *i.e.,* the length of the projection of the hook 117 from the frame 115 in the extended position. The adjustment mechanism 129 also adjusts the length of the projection of the hook 117 from the frame 115 in the retracted position. Thus, the adjustment mechanism 129 enables the latch to be used in a variety of applications where the distance between the mounting pin 151 and the keeper 153 is different. Furthermore, by adjusting the throw of the latch for a given distance between the mounting pin 151 and the keeper 153, the tensile load applied by the latch can also be increased or decreased depending on the application.

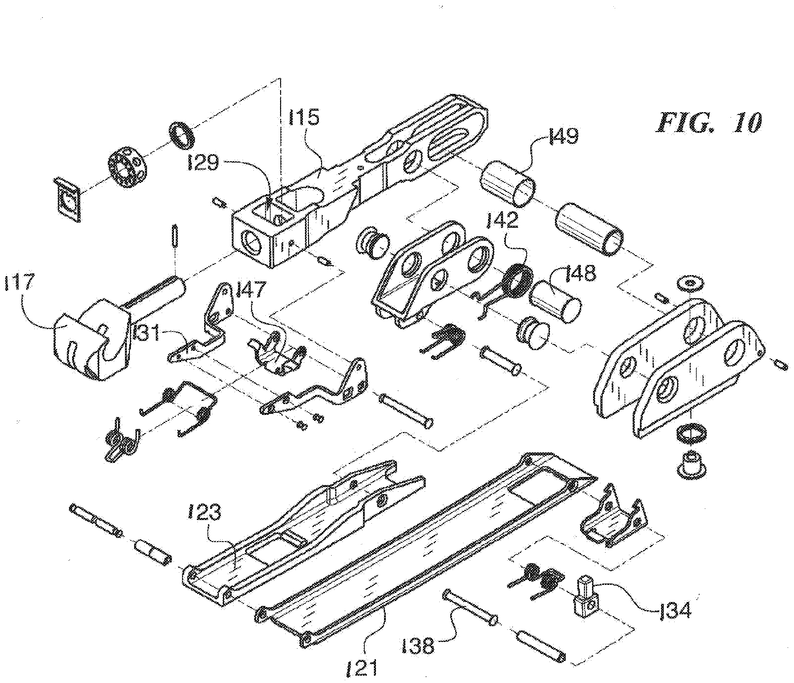

In a preferred embodiment, the latch 111 includes means for detecting whether or not the hook 117 is engaged with the keeper 153. The frame 115 has a hook sensing means that detects whether the keeper 153 occupies the mouth 119 of the hook 117. In one preferred embodiment, the detecting means includes a sensor arm 131 that is normally biased downwardly by a hairspring 144 into the mouth 119 of the hook 131. The hairspring 144 acts against the frame 115. The sensor arm 131 is rotatably mounted to the frame 115 by a bracket 143 best seen in Figs. 9 and 10. The bracket 143 is rotatably mounted on the frame 115 at a joint 145. When the keeper (not shown) properly occupies the mouth 119 of the hook 117, the sensor arm 131 is pushed upwardly against the bias of a spring 144 to the position shown in Fig. 7. In Fig. 7, the sensor arm 131 is shown in a retracted position as if the keeper 153 occupied the mouth 119; however, the keeper 153 is not shown. Normally, the keeper 153 contacts and urges the arm 131 into the position shown in Fig. 7. Otherwise, when the hook 117 is unoccupied, the sensor arm is biased into the mouth 119 of the hook 117.

Figs. 7 and 8 show the cover 121 closely abutting and covering the handle 123. A handle trigger assembly 137 releasably holds the handle 123 in this orientation. The handle trigger assembly 137 is shown in more detail in Figs. 9 and 10. The trigger assembly 137 generally comprises a trigger 147, which is rotatably mounted on the bracket 143. the trigger 147 is visible and accessible through a window in handle 123. A hairspring 139 biases the trigger upward to a home position. The trigger 147 is constructed and arranged to releaseably engage (at the back edge) a lip 141 on the underside of the handle 123. When engaged with the lip 141, the trigger assembly holds the handle 123 closed. When the trigger 147 is depressed, it disengages with the lip 141 and releases the cover 121.

Referring to Fig. 8, the latch 111 is shown in the open position when not mounted overhead. The latch 111 is biased to this position by a main spring 142, which acts between the frame 115 and the toggle linkage 113. The free end of the cover releaseably connects to the linkage 113 by way of the catch 125. Since the cover 121 moves with the handle 123, when the handle is open, the cover 121 cannot be closed against the handle because the catch hooks 135 are moved rearward and cannot engage the catch pins 128. As a result, when the handle 123 is open, the cover121 must also be open. This feature facilitates the high visibility function of the latch, especially when the latch is mounted overhead as shown in Fig. 6.

In one embodiment, the detecting means 11 is fixed to the head 4a as best seen in Fig. 4. Otherwise, when the mouth of the hook 4 is unoccupied, the first lever arm will point downwardly and a second lever arm will then point upwardly and make contact with the handle 3 to stop the handle 3 from fully closing. Thus, the detecting means prevents the latch 3 from closing if the hook is not properly engaged with the keeper.

The elements of the latch are constructed and arranged so that the handle 121 cannot close when the hook 117 is unoccupied because the handle trigger moves with the sensor since it is mounted on the sensor bracket 143. When the sensor arm 131 is rotated into the hook mouth by the spring 144, the engagement edge of the trigger 147 moves forward with it away from its engagement position with the handle catch lip 141. This movement disables the handle catch and the handle then freely moves away from the latch mechanism by action of the handle spring 140. When mounted overhead, the latch has the orientation shown in Fig. 6, which very visibly alerts inspectors that the keeper has not been engaged and that an unsafe condition exists.

Referring now to Fig. 10, an exploded assembly view shows all of the individual parts of one preferred embodiment for a complete explanation of how this embodiment of the invention is constructed. The correspondence between the parts in this Figure and the parts shown in Figs. 7-10 will be readily apparent to those of skill in the art without the need for repetitive numbering.

Referring now to Fig. 6, a preferred embodiment is depicted installed overhead on an aircraft for joining panels 51 and 52 with the latch released. The movable panel 51 may be, for example, a moveable engine fan cowl housing which includes a keeper 53 while the stationary panel 52 may be a fixed part of the engine. The latch is affixed to the stationary panel 52 by a mounting pin 162 that extends through bushing 27. Because the mounting pin 162 is located at the back end of the latch, the frame 115 and hook 117 hang downwardly by the force of gravity safely away from the engine components. In this orientation, the handle 123 and cover 121 together hang down even farther than the hook 117 at the end of the latch. This construction makes the open latch more visible to maintenance personnel when the bottom of the engine is close to the ground.

The foregoing drawings and descriptions are to be considered illustrative only of the principles and possible embodiments of the invention. Further, since numerous modifications and changes will readily occur to those skilled in the art, it is not desired to limit the invention to the exact constructions and operations shown and described. Accordingly, suitable modifications may be resorted to, all falling within the scope of the claimed invention as long as they fall within the scope of the appended claims.

## Claims

1. A latch (111) for connecting a first static overhead panel (152) of an aircraft to a keeper (153) on a second, movable overhead panel (151) of the aircraft, comprising:
a tension latch mechanism (170) having a mounting pin bushing (127) at a rear end for connection with a mounting pin (162) on the first static overhead panel (152), an elongate frame (115), and a hook (117) connected to a front end of the elongate frame (115) for releaseable engagement with the keeper (153), said tension latch mechanism (170) being operable between engaged and released positions;
an elongate handle (123) pivotably affixed to the tension latch mechanism (170) about a first axis of rotation at a rear end of the handle (123) and operative to move said tension latch mechanism (170) from the engaged position to the released position of the latch (111) as the handle (123) is moved from a closed to an open position;
a handle cover (121) pivotably affixed at one end to a front end of the handle (123) and moveable between open and closed positions; and,
a cover catch (125) on an opposite end of the handle cover (121) for releasably holding the handle cover closed,
**characterized in that** the tension latch mechanism (170) can rotate about the mounting pin bushing (127) away from the first static overhead panel (152) when the latch (111) is mounted facing downwardly on the first static overhead panel so that the hook (117) and handle (123) move downwardly and horizontally away from an opening between the first static overhead panel (152) and the second, movable overhead panel (151) by the force of gravity when the latch (111) is released, and the handle cover (121) extends downwardly away from the first end of the handle (123) also by the force of gravity.

2. The latch (111) recited in claim 1, wherein the center of gravity of the latch (111) is located forward of the mounting pin bushing (127) so that when the latch (111) is mounted overhead and the hook is disengaged from the keeper with the handle (123) in the open position, the tension latch mechanism (170) rotates about the mounting pin bushing (127) until both the tension latch mechanism (170) and handle (123) extend downwardly and the cover extends downwardly from the front end of the handle (123) by the force of gravity.

3. The latch (111) of claim 2 wherein said cover is substantially coextensive and in abutment with a top of the handle (123) when the cover is closed.

4. The latch (111) of claim 2 wherein the cover catch (125) is resiliently biased and has a manually operable trigger portion.

5. The latch (111) of claim 2 wherein the handle (123) is releaseably attached to the latch mechanism (170) to hold the handle (123) closed.

6. The latch (111) of claim 5 wherein the handle (123) is held in the closed position by a handle trigger assembly (137), optionally wherein the handle trigger assembly (137) is operable by a trigger portion that is flush with the top of the handle (123).

7. The latch (111) of claim 2 wherein the cover is rotatable about a second axis of rotation parallel to the first axis of rotation.

8. The latch (111) of claim 2 wherein the handle (123) is spring-biased toward the open position.

9. The latch (111) of claim 2 wherein the hook (117) has a mouth for engaging the keeper.

10. The latch (111) of claim 9 further including a sensor arm positioned in the mouth of the hook (117) when the hook (117) is not occupied, said arm affixed to the handle trigger assembly (137) such that the handle trigger assembly (137) is disengaged when the hook (117) is not occupied thereby preventing the handle (123) from being held in the closed position by the handle trigger assembly (137), optionally wherein the sensor arm is rotatably affixed to the frame member (115), optionally wherein the handle trigger assembly (137) is rotatably mounted on a bracket (143) of the sensor arm (131); and/or wherein the sensor arm is spring-biased toward a position where the sensor arm is positioned in the mouth of the hook (117).

11. The latch (111) of claim 2 wherein the cover catch (125) is releaseably engageable with the latch mechanism (170) such that the cover catch (125) is not engageable when the handle (123) is not closed.

12. The latch (111) of claim 5 wherein the cover catch (125), the handle (123) and the frame (115) are constructed and arranged so that the cover catch (125) is disabled when the handle (123) is not closed and prevents the cover from being held closed by the cover catch (125) when the handle (123) is not closed.

13. The latch (111) of claim 6 wherein the cover is spring-biased toward its open position and the cover catch (125) is spring-biased toward a home position flush with the cover.

14. The latch (111) of claim 10 wherein the sensor arm is rotatably affixed to the frame (115), wherein the handle trigger assembly (137) is rotatably mounted on a bracket (143) of the sensor arm (131); and wherein the handle trigger assembly (137) is spring-biased against the sensor arm (131) toward a home position on the arm.

15. The latch (111) of claim 9 wherein the latch mechanism (170) comprises a toggle linkage, optionally wherein the latch (111) is stabilized in the engaged position by an over-center condition of the linkage.

## Patentansprüche

1. Verriegelung (111) zum Verbinden einer ersten festen Überkopfplatte (152) eines Flugzeugs mit einem Halter (153) an einer zweiten beweglichen Überkopfplatte (151) des Flugzeugs, umfassend:
einen Spannverriegelungsmechanismus (170) mit einer Befestigungsstiftbuchse (127) bei einem hinteren Ende zur Verbindung mit einem Befestigungsstift (162) an der ersten festen Überkopfplatte (152), einem länglichen Rahmen (115) und einem Haken (117), der mit einem vorderen Ende des länglichen Rahmens (115) zum lösbaren Eingriff mit dem Halter (153) verbunden ist, wobei der Spannverriegelungsmechanismus (170) zwischen einer Eingriffs- und einer Freigabeposition betätigbar ist;
einen länglichen Griff (123), der schwenkbar an dem Spannverriegelungsmechanismus (170) um eine erste Drehachse bei einem hinteren Ende des Griffs (123) befestigt ist und betätigbar ist, um den Spannverriegelungsmechanismus (170) aus der Eingriffsposition in die Freigabeposition der Verriegelung (111) zu bewegen, wenn der Griff (123) aus einer geschlossenen in eine offene Position bewegt wird;
eine Griffabdeckung (121), die schwenkbar bei einem Ende an einem vorderen Ende des Griffs (123) befestigt ist und zwischen einer offenen und einer geschlossenen Position bewegbar ist; und
eine Abdeckungsarretierung (125) an einem entgegengesetzten Ende der Griffabdeckung (121) zum lösbaren Geschlossenhalten der Griffabdeckung,
**dadurch gekennzeichnet, dass** sich der Spannverriegelungsmechanismus (170) um die Befestigungsstiftbuchse (127) von der ersten festen Überkopfplatte (152) weg drehen kann, wenn die Verriegelung (111) an der ersten festen Überkopfplatte nach unten weisend befestigt ist, so dass sich der Haken (117) und der Griff (123) durch die Schwerkraft nach unten und von einer Öffnung zwischen der ersten festen Überkopfplatte (152) und der zweiten beweglichen Überkopfplatte (151) horizontal weg bewegen, wenn die Verriegelung (111) freigegeben wird, und sich die Griffabdeckung (121) auch durch die Schwerkraft von dem ersten Ende des Griffs (123) nach unten weg erstreckt.

2. Verriegelung (111) nach Anspruch 1, wobei sich der Schwerpunkt der Verriegelung (111) vor der Befestigungsstiftbuchse (127) befindet, so dass, wenn die Verriegelung (111) über Kopf befestigt ist und der Haken von dem Halter gelöst ist, wenn sich der Griff (123) in der offenen Position befindet, sich der Spannverriegelungsmechanismus (170) um die Befestigungsstiftbuchse (127) dreht, bis sich sowohl der Spannverriegelungsmechanismus (170) als auch der Griff (123) durch die Schwerkraft nach unten erstrecken und sich die Abdeckung von dem vorderen Ende des Griffs (123) nach unten erstreckt.

3. Verriegelung (111) nach Anspruch 2, wobei die Abdeckung im Wesentlichen flächengleich ist und an einer Oberseite des Griffs (123) anliegt, wenn die Abdeckung geschlossen ist.

4. Verriegelung (111) nach Anspruch 2, wobei die Abdeckungsarretierung (125) elastisch vorgespannt ist und einen manuell bedienbaren Auslöseabschnitt aufweist.

5. Verriegelung (111) nach Anspruch 2, wobei der Griff (123) lösbar an dem Verriegelungsmechanismus (170) angebracht ist, um den Griff (123) geschlossen zu halten.

6. Verriegelung (111) nach Anspruch 5, wobei der Griff (123) durch eine Griffauslöseanordnung (137) in der geschlossenen Position gehalten wird, wobei die Griffauslöseanordnung (137) optional durch einen Auslöseabschnitt bedienbar ist, der bündig mit der Oberseite des Griffs (123) ist.

7. Verriegelung (111) nach Anspruch 2, wobei die Abdeckung um eine zweite Drehachse parallel zu der ersten Drehachse drehbar ist.

8. Verriegelung (111) nach Anspruch 2, wobei der Griff (123) in Richtung der offenen Position federvorgespannt ist.

9. Verriegelung (111) nach Anspruch 2, wobei der Haken (117) eine Öffnung zum Eingriff mit dem Halter aufweist.

10. Verriegelung (111) nach Anspruch 9, ferner umfassend einen Sensorarm, der in der Öffnung des Hakens (117) positioniert ist, wenn der Haken (117) nicht belegt ist, wobei der Arm derart an der Griffauslöseanordnung (137) befestigt ist, dass die Griffauslöseanordnung (137) gelöst ist, wenn der Haken (117) nicht belegt ist, wodurch verhindert wird, dass der Griff (123) durch die Griffauslöseanordnung (137) in der geschlossenen Position gehalten wird, wobei der Sensorarm optional drehbar an dem Rahmenelement (115) befestigt ist, wobei die Griffauslöseanordnung (137) optional drehbar an einer Halterung (143) des Sensorarms (131) befestigt ist; und/oder wobei der Sensorarm in Richtung einer Position federvorgespannt ist, in der der Sensorarm in der Öffnung des Hakens (117) positioniert ist.

11. Verriegelung (111) nach Anspruch 2, wobei die Abdeckungsarretierung (125) lösbar mit dem Verriegelungsmechanismus (170) in Eingriff bringbar ist, so dass die Abdeckungsarretierung (125) nicht in Eingriff bringbar ist, wenn der Griff (123) nicht geschlossen ist.

12. Verriegelung (111) nach Anspruch 5, wobei die Abdeckungsarretierung (125), der Griff (123) und der Rahmen (115) derart konstruiert und angeordnet sind, dass die Abdeckungsarretierung (125) deaktiviert ist, wenn der Griff (123) nicht geschlossen ist, und verhindert, dass die Abdeckung durch die Abdeckungsarretierung (125) geschlossen gehalten wird, wenn der Griff (123) nicht geschlossen ist.

13. Verriegelung (111) nach Anspruch 6, wobei die Abdeckung in Richtung ihrer offenen Position federvorgespannt ist und die Abdeckungsarretierung (125) in Richtung einer Ausgangsposition, die bündig mit der Abdeckung ist, federvorgespannt ist.

14. Verriegelung (111) nach Anspruch 10, wobei der Sensorarm drehbar an dem Rahmen (115) befestigt ist, wobei die Griffauslöseanordnung (137) drehbar an einer Halterung (143) des Sensorarms (131) befestigt ist; und wobei die Griffauslöseanordnung (137) gegen den Sensorarm (131) in Richtung einer Ausgangsposition an dem Arm federvorgespannt ist.

15. Verriegelung (111) nach Anspruch 9, wobei der Verriegelungsmechanismus (170) eine Kniehebelverbindung umfasst, wobei die Verriegelung (111) optional in der Eingriffsposition durch einen Übertotpunktzustand der Verbindung stabilisiert ist.

## Revendications

1. Verrou (111) destiné à connecter un premier panneau supérieur statique (152) d'un aéronef à un moyen de retenue (153) sur un second panneau supérieur mobile (151) de l'aéronef, comprenant :
un mécanisme de verrouillage par traction (170) ayant une douille à broche de montage (127) au niveau d'une extrémité arrière pour une connexion à une broche de montage (162) sur le premier panneau supérieur statique (152), un cadre allongé (115), et un crochet (117) connecté à une extrémité avant du cadre allongé (115) pour un engagement libérable avec le moyen de retenue (153), ledit mécanisme de verrouillage par traction (170) pouvant fonctionner entre une position engagée et une position libérée ;
une poignée allongée (123) fixée de manière pivotante sur le mécanisme de verrouillage par traction (170) autour d'un premier axe de rotation au niveau d'une extrémité arrière de la poignée (123) et fonctionnant de façon à déplacer ledit mécanisme de verrouillage par traction (170) de la position engagée à la position libérée du verrou (111) lorsque la poignée (123) est déplacée d'une position fermée à une position ouverte ;
une couverture de poignée (121) fixée de manière pivotante à une extrémité d'une extrémité avant de la poignée (123) et pouvant être déplacée entre une position ouverte et une position fermée ; et
un loquet de couverture (125) sur une extrémité opposée de la couverture de poignée (121) pour maintenir de manière libérable la couverture de poignée fermée,
**caractérisé en ce que**
le mécanisme de verrouillage par traction (170) peut être mis en rotation autour de la douille de broche de montage (127) en éloignement du premier panneau supérieur statique (152) quand le verrou (111) est monté tourné vers le bas sur le premier panneau supérieur statique de telle sorte que le crochet (117) et la poignée (123) se déplacent vers le bas et horizontalement en éloignement d'une ouverture entre le premier panneau supérieur statique (152) et le second panneau supérieur mobile (151) par force de gravité quand le verrou (111) est libéré, et la couverture de poignée (121) s'étend vers le bas en éloignement de la première extrémité de la poignée (123) également par force de gravité.

2. Verrou (111) selon la revendication 1, dans lequel le centre de gravité du verrou (111) est situé à l'avant de la douille de broche de montage (127) de telle sorte que, quand le verrou (111) est monté en haut et que le crochet est désengagé du moyen de retenue avec la poignée (123) dans la position ouverte, le mécanisme de verrouillage par traction (170) est mis en en rotation autour de la douille de broche de montage (127) jusqu'à ce que le mécanisme de verrouillage par traction (170) et la poignée (123) s'étendent tous deux vers le bas et que la couverture s'étende vers le bas depuis l'extrémité avant de la poignée (123) par force de gravité.

3. Verrou (111) selon la revendication 2, dans lequel ladite couverture est sensiblement co-extensive et en butée avec un dessus de la poignée (123) quand la couverture est fermée.

4. Verrou (111) selon la revendication 2, dans lequel le loquet de couverture (125) est sollicité de manière élastique et a une portion de déclenchement à fonctionnement manuel.

5. Verrou (111) selon la revendication 2, dans lequel la poignée (123) est attachée de manière libérable au mécanisme de verrouillage (170) pour maintenir la poignée (123) fermée.

6. Verrou (111) selon la revendication 5, dans lequel la poignée (123) est maintenue dans la position fermée par un assemblage de déclenchement de poignée (137), en option dans lequel l'assemblage de déclenchement de poignée (137) peut fonctionner via une portion de déclenchement qui est en affleurement avec le dessus de la poignée (123).

7. Verrou (111) selon la revendication 2, dans lequel la couverture peut être mise en rotation autour d'un second axe de rotation parallèle au premier axe de rotation.

8. Verrou (111) selon la revendication 2, dans lequel la poignée (123) est sollicitée par ressort vers la position ouverte.

9. Verrou (111) selon la revendication 2, dans lequel le crochet (117) a un bec destiné à engager le moyen de retenue.

10. Verrou (111) selon la revendication 9, en incluant en outre un bras de capteur positionné dans le bec du crochet (117) quand le crochet (117) n'est pas occupé, ledit bras étant fixé à l'assemblage de déclenchement de poignée (137) de telle sorte que l'assemblage de déclenchement de poignée (137) est désengagé quand le crochet (117) n'est pas occupé, empêchant ainsi la poignée (123) être maintenue dans la position fermée par l'assemblage de déclenchement de poignée (137), en option dans lequel le bras de capteur est fixé en rotation au cadre (115), en option dans lequel l'assemblage de déclenchement de poignée (137) est monté en rotation sur un support (143) du bras de capteur (131) ; et/ou dans lequel le bras de capteur est sollicité par ressort vers une position où le bras de capteur est positionné dans le bec du crochet (117).

11. Verrou (111) selon la revendication 2, dans lequel le loquet de couverture (125) peut être engagé de manière libérable avec le mécanisme de verrouillage (170) de telle sorte que le loquet de couverture (125) ne peut pas être engagé quand la poignée (123) n'est pas fermée.

12. Verrou (111) selon la revendication 5, dans lequel le loquet de couverture (125), la poignée (123) et le cadre (115) sont conçus et agencés de telle sorte que le loquet de couverture (125) est désactivé quand la poignée (123) n'est pas fermée et empêche la couverture d'être maintenue fermée par le loquet de couverture (125) quand la poignée (123) n'est pas fermée.

13. Verrou (111) selon la revendication 6, dans lequel la couverture est sollicitée par ressort vers sa position ouverte et le loquet de couverture (125) est sollicité par ressort vers une position initiale en affleurement avec la couverture.

14. Verrou (111) selon la revendication 10, dans lequel le bras de capteur est fixé en rotation au cadre (115), dans lequel l'assemblage de déclenchement de poignée (137) est monté en rotation sur un support (143) du bras de capteur (131) ; et dans lequel l'assemblage de déclenchement de poignée (137) est sollicité par ressort contre le bras de capteur (131) vers une position initiale sur le bras.

15. Verrou (111) selon la revendication 9, dans lequel le mécanisme de verrouillage (170) comprend une tringlerie à bascule, en option dans lequel le verrou (111) est stabilisé dans la position engagée par une condition de dépassement de point mort de la tringlerie.
